# EUROPEAN PATENT APPLICATION

(11) **EP 4 745 642 A2**
(43) Date of publication of application: **20.05.2026**
(21) Application number: 25215216.0
(22) Date of filing: 12.11.2025
(51) Int. Cl.: G02B 6/44

(54) **SYSTEMS, METHODS, AND DEVICES FOR ORGANIZING CABLES WITHIN RACK MOUNT HOUSINGS**

(30) Priority: 18.11.2024 US 202463721606 P
(71) Applicant: CORNING RESEARCH & DEVELOPMENT CORPORATION, Corning NY 14831 (US)
(72) Inventor: GALINSKI, Hubert Stanislaw, 95-015 Glowno (PL); OZAREK, Dawid, Dariusz, 97-300 Lodzkie (PL); RUDA, Michal, 95-060 Brzeziny (PL)
(74) Representative: Reddie & Grose LLP

(57) **Abstract**

Systems are provided that include a housing with a splice tray, one or more connection features, a first compartment comprising a first mounting feature, and a second compartment. At least 0.5 meters of a second cable is stored within the second compartment, and the second cable runs from the splice tray, through the second compartment, and feeds out into one or more pigtail cables that lead to the one or more connection features.

## Description

### PRIORITY APPLICATION

This application claims the benefit of priority of U.S. Provisional Application No. 63/721,606, filed on November 18, 2024, the content of which is relied upon and incorporated herein by reference in its entirety

### FIELD OF THE DISCLOSURE

Embodiments of the present disclosure relate generally to network communications equipment and, more particularly, to devices, methods, and systems for organizing cables within rack mount housings (e.g., housings disposed within rack assemblies), such as within communications equipment rack environments.

### BACKGROUND OF THE DISCLOSURE

Cables (such as those used to carry communication optical fiber) are often routed in and out of communications equipment cabinets and other enclosures in order to connect with various communications equipment. Such communications equipment cabinets and other enclosures are sometimes designed to guide certain incoming optical cables (and their corresponding fibers) into connection terminals. For example, rack assemblies may be used to hold housings that each have one or more splice trays to splice fibers of an incoming cable with those of another cable that are ultimately connected to certain connection terminals. These assemblies are very compact and the splice connections are very complex. Moreover, maintenance to adjust splicing can be difficult, particularly as many of the housings and splice trays may be positioned near each other in large rack assemblies.

As the demand for high-speed, robust, and scalable network solutions is ever-increasing, the traditional methods are facing several limitations in terms of speed, capacity, and scalability. Indeed, managing cables in data centers, where space is often limited, poses significant challenges.

Improvements in the foregoing are desired.

### BRIEF SUMMARY OF THE DISCLOSURE

In data centers, rack assemblies may include large numbers of housings with splice trays, where such housings are held in a vertically stacked manner. The capacity and height of such housings within the rack assemblies often cause difficulties during installation and maintenance of cables and/or fibers running into and out of the housings within the rack assemblies. Indeed, in order to allow a user to perform splicing operations, such as during installation or maintenance of cables and/or fibers running into and out of the housings, additional length of cables and/or fibers may be required, allowing the splice trays to be pulled out and positioned at the proper height and position within the rack assembly to enable an operator to work on them. Thus, it can be cumbersome and confusing for operators to deal with the long lengths of cables. Notably, tying or otherwise fixing sections of the cables to portions of the rack assemblies creates problems, such as managing routing and enabling future access - particularly in a small space like a rack assembly. Further, easy access to individual fibers for maintenance or reconfiguration without disturbing adjacent connections is essential to minimize downtime and operational disruptions. The tying or otherwise fixing of cables is undesirable because maintenance workers often must re-tie and/or re-fix the cables during and after the maintenance tasks.

Embodiments of the present disclosure provide for various systems, devices, and methods that resolve many of the above noted defects and difficulties. In this regard, various embodiments of the present disclosure provide systems, devices, and methods for organizing cables and/or fibers within housings, which may be disposed in rack assemblies, in a manner that requires minimal effort, tools, and time from an installer. Such solutions include compartments installed within or integral with housings that are designed to house cable overlengths in a way that does not require further attention during other maintenance procedures.

As noted herein, using zip ties and/or other products to fix certain portions of cable to parts of a rack assembly is undesirable because the portions of cable that are fixed to the rack assembly have to be moved such that maintenance can be conducted and because the tying process can be disorganized and time consuming. Disclosed herein are solutions that organize cable overlengths in a way that is efficient and does not require additional steps when later maintenance is performed. In this regard, incoming and outgoing cables are separated and stored in individual compartments. The separation, in some embodiments, is on either side of a main functional area (e.g., a splice tray) which makes the structure of the system and operations logical and easy to follow for technicicans. This enables quick and reliable cable management and does not require any additional tools or materials. Further, the solutions disclosed herein enable effective management of significant lengths of excess cable, which in turn, enables operators to take components from the main functional area (e.g., a splice tray) out of the housing such that further work can be done on the main functional area outside of the housing.

Some of the systems, devices, enclosures, and methods disclosed herein include a housing that is disposable within, e.g., a rack assembly. The housing includes a first compartment and a second compartment, along with a splice tray. The splice tray may be positioned in between the first compartment and the second compartment in some embodiments, but in other embodiments, the splice tray may be located anywhere in the housing. The housing also includes one or more connection features such as connection terminals that are designed to connect to other devices. The first compartment may have a first mounting feature designed to mount an incoming cable. The incoming cable may feed into the housing via the first mounting feature and then at least 0.5 meters of the incoming cable may be stored within the first compartment. A portion of the incoming cable may then be routed from the first compartment to the splice tray, and that end of the incoming cable may be spliced within the splice tray with a second cable that is routed from the splice tray to the second compartment, where at least 0.5 meters of the second cable is stored. A portion of the second cable may then be routed out of the second compartment and lead to the one or more connection features (e.g., connection terminals) for connection with other devices.

In an example embodiment, a system is provided. The system includes a housing including one or more connection features, a first compartment including a first mounting feature, a second compartment, and a splice tray disposed between the first compartment and the second compartment. At least 0.5 meters of a second cable is stored within the second compartment, and the second cable runs from the splice tray, through the second compartment, and feeds out into one or more pigtail cables that lead to the one or more connection features.

In some embodiments, an incoming cable may be mountable to the first mounting feature such that the incoming cable feeds into the first compartment. At least 0.5 meters of the incoming cable may be storable within the first compartment, and the incoming cable may be spliced to the second cable via the splice tray.

In some embodiments, at least a first portion of the incoming cable may be removable from the first compartment without disturbing the incoming cable being mounted to the first mounting feature, and at least a second portion of the second cable may be removable from the second compartment without disturbing the incoming cable being mounted to the first mounting feature.

In some embodiments, the first compartment may further include a first cable hard stop, and the second compartment may further include a second cable hard stop. The first cable hard stop and the second cable hard may cause the incoming cable and the second cable to stay within the first compartment and the second compartment, respectively.

In some embodiments, the second compartment may include a second mounting feature such that the incoming cable and the second cable are interchangeable within the first compartment and the second compartment.

In some embodiments, the incoming cable may be storable in the first compartment in a loop configuration.

In some embodiments, the first compartment may include a first top portion and a first bottom portion, and the second compartment may include a second top portion and a second bottom portion.

In some embodiments, the first top portion, the second top portion, the first bottom portion, and the second bottom portion may be integral with the housing.

In some embodiments, the first top portion and the first bottom portion may be connected by a first side portion and a second side portion, and the second top portion and the second bottom portion may be connected by a third side portion and a fourth side portion.

In some embodiments, the splice tray may be removable from the housing.

In some embodiments, the system further may include a second splice tray, a third compartment, and a fourth compartment.

In some embodiments, at least 1 meter of the second cable may be storable within the second compartment.

In another example embodiment, a compartment for storing at least one cable within a housing is provided. The compartment includes a top portion, a bottom portion opposite the top portion, and a mounting feature extending from the compartment. The at least one cable is mountable to the mounting feature such that the at least one cable feeds into the compartment, and at least 0.5 meters of the at least one cable is storable within the compartment.

In some embodiments, the compartment may further include a first side portion and a second side portion, the first side portion being adjacent the second side portion.

In some embodiments, the compartment may further include a cable hard stop attached to the top portion on a side of the top portion that is nearest the bottom portion.

In some embodiments, the at least one cable may be storable within the compartment in a loop configuration.

In some embodiments, the cable hard stop may interact with the compartment and the at least one cable such that the at least one cable is not able to shift to an undesirable position within or outside the compartment.

In some embodiments, the top portion may be removable from the bottom portion.

In some embodiments, the top portion may be integral with a cover of a housing in which the compartment is disposed.

In some embodiments, the compartment may define an opening for user access to the at least one cable.

In another example embodiment, a rack is provided. The rack includes at least one housing, and the housing includes one or more connection features, a first compartment including a first mounting feature, a second compartment, and a splice tray disposed between the first compartment and the second compartment. At least 0.5 meters of a second cable is stored within the second compartment, and the second cable runs from the splice tray, through the second compartment, and feeds out into one or more pigtail cables that lead to the one or more connection features.

In another example embodiment, a method for installing a cable is provided. The method includes removing a first cable from a first compartment within a housing, the housing including a splice tray, one or more connection features, the first compartment, and a second compartment. The method also includes removing the splice tray from the housing, splicing the first cable with a second cable using the splice tray, placing the splice tray back in the housing, placing at least 0.5 meters of the first cable in the first compartment, and placing at least 0.5 meters of the second cable in the second compartment.

### BRIEF DESCRIPTION OF THE DRAWINGS

Having thus described embodiments of the present disclosure in general terms, reference may now be made to the accompanying drawings, which are not necessarily drawn to scale, and wherein:
FIG. 1A shows a perspective view of an example enclosure for a rack assembly, in accordance with some embodiments disclosed herein, in accordance with some embodiments discussed herein;
FIG. 1B illustrates a perspective view of the enclosure of FIG. 1A with a panel removed, showing a plurality of housings disposed therein on racks, in accordance with some embodiments discussed herein;
FIG. 2 illustrates a perspective view of one of the housings from FIG. 1B, in accordance with some embodiments discussed herein;
FIG. 3 illustrates a perspective view of the housing of FIG. 2, with a cover of the housing removed, in accordance with some embodiments discussed herein;
FIG. 4 illustrates a rear perspective view of a first compartment of the housing of FIGs. 2-3, in accordance with some embodiments discussed herein;
FIG. 5 illustrates a rear view of the first compartment of FIG. 4, in accordance with some embodiments discussed herein;
FIG. 6 illustrates a perspective view of the housing of FIGs. 2-3 with an incoming cable installed therewithin, in accordance with some embodiments discussed herein;
FIG. 7 illustrates a rear view of the housing and installed incoming cable of FIG. 6, in accordance with some embodiments discussed herein; and
FIG. 8 illustrates a perspective view of another example housing, in accordance with some embodiments discussed herein;
FIG. 9A illustrates a perspective view of a rack assembly, a housing disposed within the rack assembly, and a user, in accordance with some embodiments discussed herein;
FIG. 9B illustrates a perspective view of the rack assembly, housing, and user of FIG. 9A with the user pulling one or more cables out of the housing, in accordance with some embodiments discussed herein;
FIG. 9C illustrates a perspective view of the rack assembly, housing, and user of FIGs. 9A-9B with the user splicing cables connected to the housing on a splice tray that has been pulled out of the housing, in accordance with some embodiments discussed herein; and
FIG. 10 illustrates a flowchart for an example method of installing a cable, in accordance with some embodiments discussed herein.

### DETAILED DESCRIPTION

Exemplary embodiments of the present disclosure are described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure satisfies applicable legal requirements. Like reference numerals refer to like elements throughout.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (e.g., network access point (NAP) enclosures, optical network terminals (ONTs), network interface devices (NIDs)). Accordingly, corresponding fiber optic cables may be managed (e.g., routed through, split, reconfigured, connected, etc.) in many different communications equipment cabinets and other enclosures.

The connection terminals may be used to extend fiber optic communications services to a subscriber. In this regard, fiber optic networks may deliver "fiber-to-the-curb" (FTTC), "fiber-to-the-business" (FTTB), "fiber-to-the-home" (FTTH) and "fiber-to-the-premises" (FTTP), referred to generically as "FTTx". For example, delivering services to subscribers in the last mile connection may occur indoors. Different kinds of buildings may require complicated cabling systems, which can include many separated cables, each one connecting one subscriber.

Some interconnection points include enclosures such as rack assemblies that are used in places such as data centers, network rooms, central offices, and/or in intent-based networking. For example, fibers are often organized and managed within standardized 19-inch racks (although other size racks are contemplated herein). Such racks are designed to hold and protect fiber optic cables (e.g., fibers) that have been spliced together. Splicing is a process in which fibers are connected to allow light signals to pass between them, ensuring that data can travel smoothly over long distances. Inside of such enclosures, there are typically housing assemblies or splice trays that hold and manage each spliced fiber. This helps ensure that the cables and their fibers do not bend or get damaged, which could interrupt the data flow. These enclosures are crucial for making sure that fiber connections stay strong and reliable, especially in environments like data centers, where lots of data is being transmitted between servers and other equipment.

As noted above, rack assembly enclosures are commonly compact. Thus, in scenarios in which an extra length of cable is needed (e.g., so that a splice tray can be removed for splicing the fibers outside of the housing), the extra cable is often positioned in the rack assembly where the extra cable can become tangled or disorganized within the rack assembly. Although maintenance workers sometimes try to maintain organization by tying or fixing the extra cable on or within the rack assembly, a need exists for systems and methods to organize cable overlength in a rack assembly such that extra material and/or tools are not needed and such that the cable overlength does not have to be re-adjusted when additional maintenance is performed.

Systems and assemblies according to the present disclosure allow maintenance personnel to organize and store cable overlength in a rack assembly (and other related settings) in an improved manner, as discussed herein. In this regard, various example systems and assemblies described herein may enable easier installation of such cable overlength within housings of a rack assembly. In some embodiments, example systems and assemblies may be configured to include compartments that house, e.g., an incoming cable and a pigtail cable in a way that allows a maintenance worker to easily move a splice tray in and out of the housing without damaging or otherwise affecting any of the connections within the housing.

While some of the illustrated and described embodiments focus on use of various embodiments in rack assemblies, any type of enclosure or structure is contemplated for use with various embodiments. For example, the disclosed systems and assemblies may be employed in many different fiber optic management scenarios, such as in optical fiber distribution hub cabinets, multi-dwelling unit cabinets, front-end and/or back-end cabinets, closures, or other terminals. In some embodiments, various concepts and designs may be easily adjusted for any communications equipment.

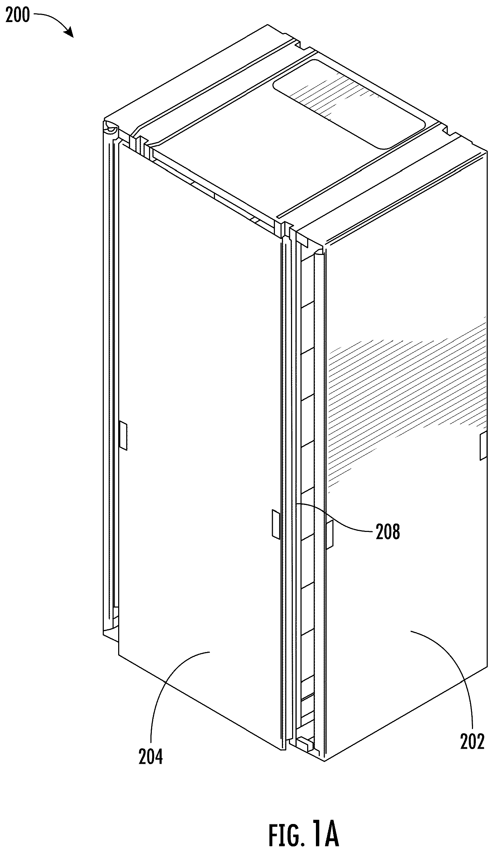

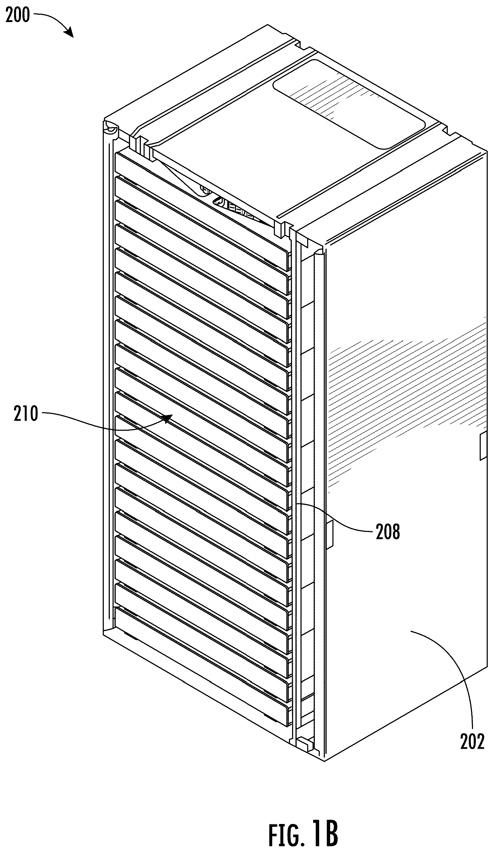

Referring first to FIGs. 1A and 1B, an enclosure 200 is shown. FIG. 1A shows an enclosure 200 that includes an outer housing 202 and a door 204. FIG. 1B shows the enclosure 200 with the door 204 removed. Within the enclosure 200 is a rack assembly 208 that holds a plurality of housings 210. For example, in some embodiments, the plurality of housings 210 may each include splice trays or any other type of cable management components. In some embodiments, such enclosures may include, e.g., a 19-inch rack assembly in an environment such as a data center or a network room. Rack assembly 208 may be used to manage cable(s) and/or fiber(s) and to enable splicing of incoming cable(s) and/or fiber(s) to pigtail cable(s) that connect directly to downstream optical communications equipment, such as network switches or routers, housed in the same 19-inch rack assembly. Although a 19-inch rack assembly in shown in FIGs. 1A-1B, it should be appreciated that the embodiments disclosed herein may include any other type of fiber optic enclosure, and are not limited to a 19-inch rack assembly. For example, the concepts presented herein may be scaled for different rack standards such as 21-inch or 23-inch rack assemblies, or a system that does not utilize a rack at all may be used as well. Further, any height of the racks or enclosures may be compatible with the disclosures herein. For example, various embodiments are compatible different sized housings, such as 1U, 2U, 4U, 6U, 8U, etc.

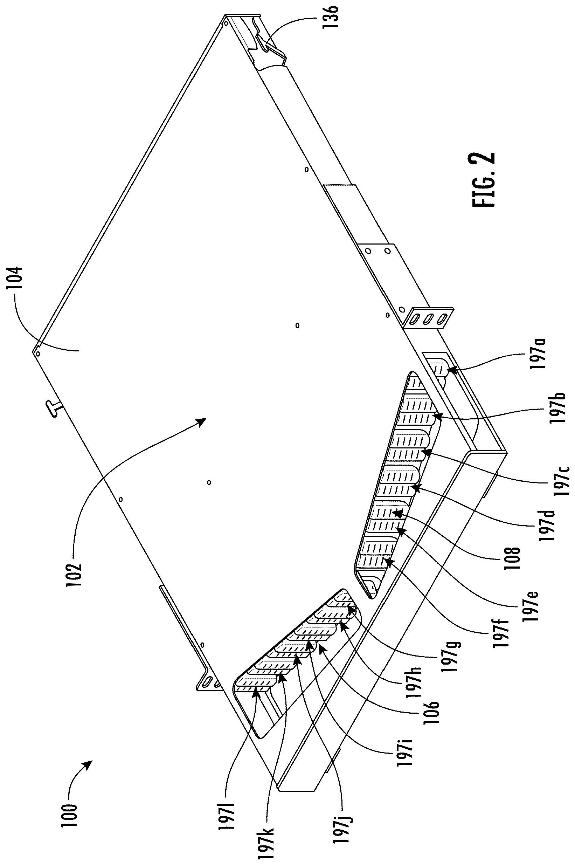

FIG. 2 shows a housing 100 with a cover 102. The housing 100 may be positionable within a rack assembly 208 of enclosure 200 (FIGs. 1A-1B). In some embodiments, the housing 100 may be positionable in any other type of fiber optic enclosure apparatus.

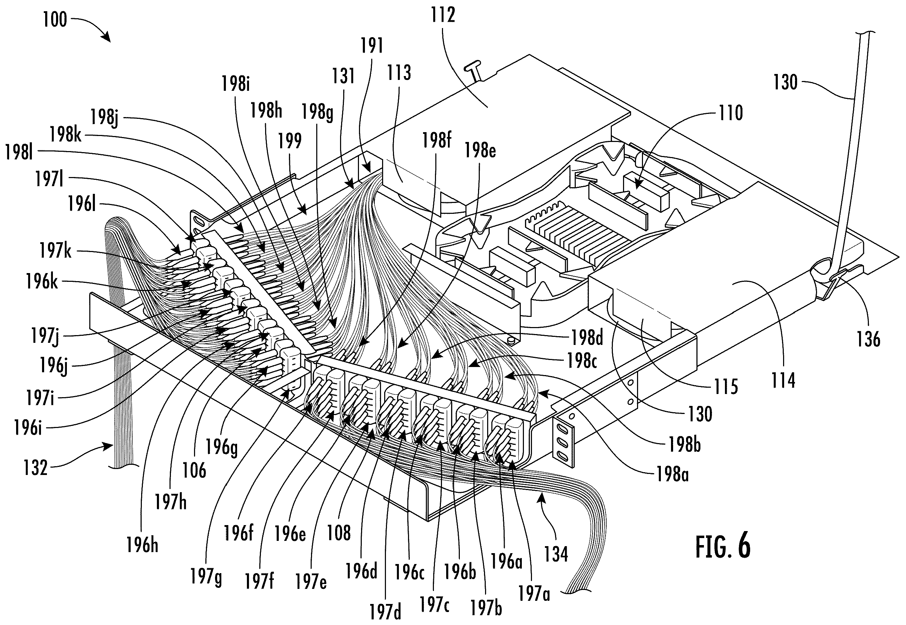

The housing 100 comprises first connection ports 108 and second connection ports 106, which are connectable to a pigtail cable 131 that can be organized and stored within the housing 100 (e.g., see FIG. 6). That is, first connection ports 108 include a first connection port 197a, a second connection port 197b, a third connection port 197c, a fourth connection port 197d, a fifth connection port 197e, and a sixth connection port 197f. Each of the first connection ports 108 is connected to one set of the fibers 198a-f (FIG. 6) extending from the pigtail cable 131, and each of the first connection ports 108 is connectable to one of the sets 196a-f of connection cables 134. Similarly, second connection ports 106 include a seventh connection port 197g, an eighth connection port 197h, a ninth connection port 197i, a tenth connection port 197j, a eleventh connection port 197k, and a twelfth connection port 1971. Each of the second connection ports 106 is connected to one set of the fibers 198g-1 (FIG. 6) extending from the pigtail cable 131, and each of the second connection ports 106 is connectable to one of the sets 196g-1 of connection cables 132. For example, the first connection port 197a is connected to a first set of fibers 198a extending from the pigtail cable 131, and a first set of connection cables 196a are plugged into the first connection port 197a such that the first set of connection cables 196a are in optical communication with the first set of fibers 198a. The purpose of first connection ports 108 and second connection ports 106 may be to connect external devices to a network (via the components within the housing 100, as described herein).

Each connection ports 197a-1 has the capacity to connect eight (8) fibers to eight connection cables. However, it is within the scope of the present disclosure that any other number of connections may be achieved in other embodiments. For example, another embodiment may include connection ports that connect four fibers to four connection cables.

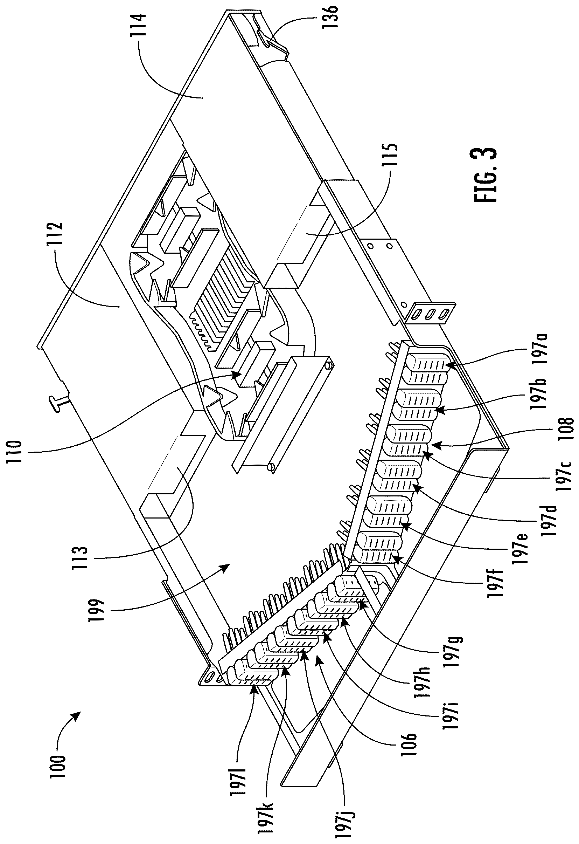

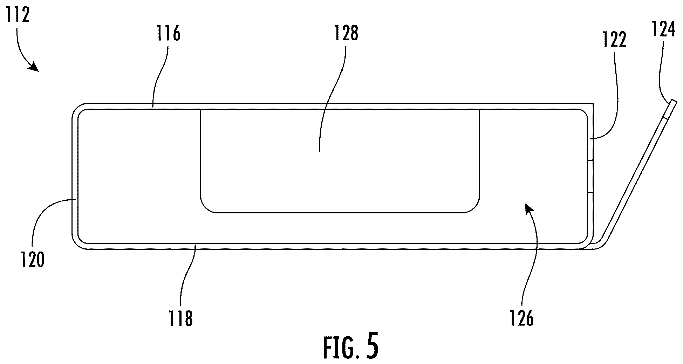

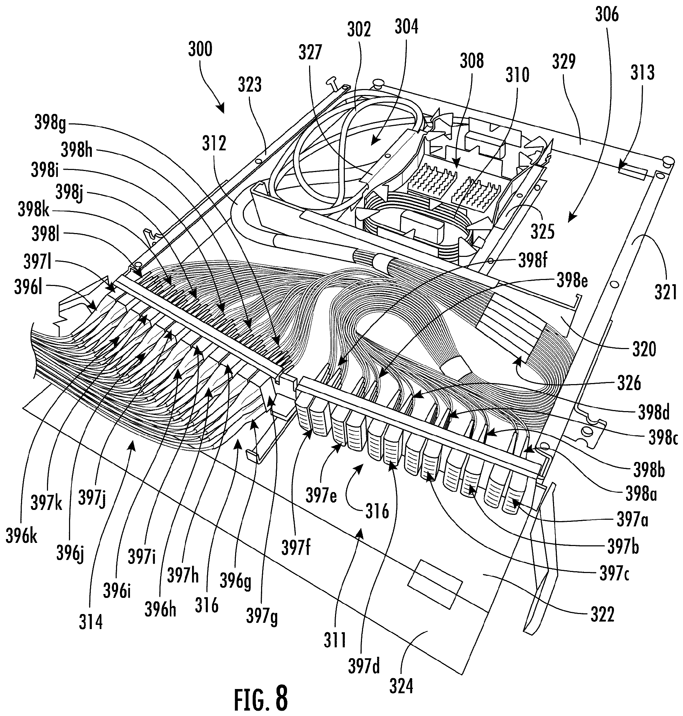

FIG. 3 shows the housing 100 with the cover 102 removed. The housing 100 includes a first compartment 112 and a second compartment 114 with a splice tray 110 positioned between the first compartment 112 and the second compartment 114. The first compartment 112 is a designated region within the housing 100 for a particular cable or number of cables. In the embodiment shown in FIGs. 2-7, the first compartment 112 is configured to receive and house a portion of the pigtail cable 131 that is positioned within the splice tray 110 on one end and connected to first connection ports 108 and second connection ports 106 on the other end (an example pigtail cable 302 is shown in FIG. 8 in such an installation configuration). However, it should be appreciated that the first compartment 112 may, in other embodiments, be configured to receive and house an incoming cable or any or type of cable or fiber.

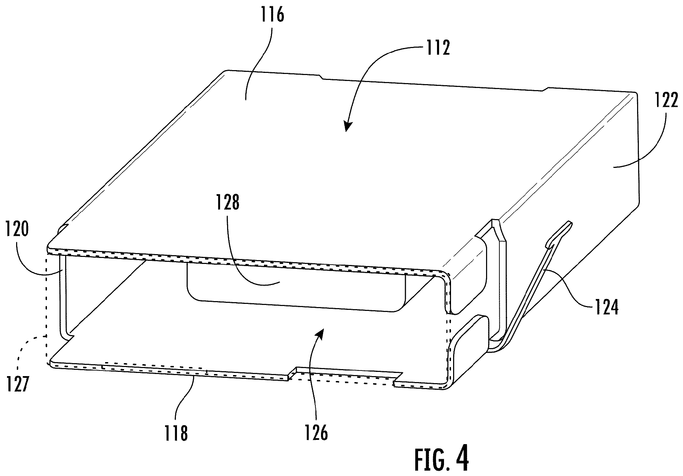

Referring now to FIGs. 4-5, the first compartment 112 may have a top portion 116, a bottom portion 118 opposite the top portion 116, a first side portion 120, and a second side portion 122 opposite the first side portion 120. The top portion 116, the bottom portion 118, the first side portion 120, and the second side portion 122 define an interior volume 126 in which one or more cables and/or fibers are organized or otherwise housed such that they are separated and organized from other components within the housing 100. As shown in FIGs. 3-5, the top portion 116 and the bottom portion 118 may be separate from the housing 100. However, in other embodiments, such as shown and described with respect to FIG. 8, at least one of the top portion 116 or the bottom portion 118 may be integral with the housing 100. In some embodiments in which the top portion 116 and the bottom portion 118 are integral with the housing 100, the top portion 116 is part of and/or is integral with the cover 104, and the bottom portion 118 is part of and/or integral with a bottom portion of the housing 100. In either scenario (or in other scenarios), the top portion 116 may be removable from the bottom portion 118.

In some embodiments, the first compartment 112 may have a front cover 113. FIGs. 3 and 6 show first compartment 112 having a partial front cover 113 which extends from the top portion 116 and/or the bottom portion 118 of the first compartment 112 in a front plane. The front cover 113 may only partially cover the front plane of the first compartment 112, such that one or more cables can pass through an opening 191 (e.g., as shown in FIG. 6). It should be appreciated, however, that the first compartment 112 may not have a front cover 113 in some embodiments. The front cover 113, when present, may serve to further guide and organize one or more cables being received by the first compartment 112.

Similarly, in some embodiments, the first compartment 112 may have a back cover 127, as shown in dashed lines in FIG. 4. As shown, the back cover 127 may cover (either partially or fully) the opening to the interior volume 126. That is, the back cover 127 may cover the rear opening of the first compartment 112. As an example, the back cover 127 hinges or otherwise opens for a user to easily access the first compartment 112. Although not necessary, the back cover 127 may further contain and protect the one or more cables stored in the first compartment 112. It should be appreciated that many embodiments may not include a back cover 127.

The first compartment 112 may also include, in some embodiments, a cable hard stop 128. As shown in FIGs. 4-5, the cable hard stop 128 may be a material or structure disposed on an inside surface of the top portion 116 (e.g., on and extending from a side of the top portion 116 that is nearest the bottom portion 118). The cable hard stop 128 extends into the interior volume 126 of the first compartment 112 and prevents one or more cables disposed within the interior volume 126 of the first compartment 112 from shifting within the first compartment 112 to undesirable positions (such as into an interior fiber routing portion 199 (FIG. 3) where the pigtail cable 131 is separated into sets of fibers 198a-1 that are each connected to one of the connection ports 197a-n). It should be appreciated that the cable hard stop 128 may be part of or integral with the front cover 113 in some embodiments. It should also be appreciated that the cable hard stop 128 may be any other suitable shape, size, or material than depicted in the figures.

The first compartment 112 may also include, in some embodiments, a first mounting feature 124. The first mounting feature 124 may be a protrusion or any other mounting structure designed to secure and/or guide a cable in and/or out of the first compartment 112. For example, the first mounting feature 124 may be used to mount and/or secure an incoming cable so that the incoming cable can be guided into the first compartment 112. It is within the scope of the present disclosure that in some embodiments, first compartment 112 may not include first mounting feature 124. That is, in some embodiments, first mounting feature 124 is optional within the first compartment 112.

The second compartment 114 may be similar to the first compartment 112. That is, the second compartment 114 is a designated region within the housing 100 for a particular cable or number of cables. In the embodiment shown in FIGs. 2-7, the second compartment 114 is configured to receive and house a portion of an incoming cable that is positioned within the splice tray 110 on one end and exits the housing 100 on the other end. However, it should be appreciated that the second compartment 114 may, in other embodiments, be configured to receive and house a pigtail cable or any or type of cable or fiber.

Similar to the first compartment 112 shown and described with respect to FIGs. 4-5, the second compartment 114 may have a top portion, a bottom portion opposite the top portion, a first side portion, and a second side portion opposite the second side portion. The top portion, the bottom portion, the first side portion, and the second side portion define an interior volume 138 in which one or more cables and/or fibers are organized or otherwise housed such that they are separated and organized from other components within the housing 100. The top portion and the bottom portion may be separate from the housing 100. However, in other embodiments, such as shown and described with respect to FIG. 8, at least one of the top portion or the bottom portion may be integral with the housing 100. In some embodiments in which the top portion and the bottom portion are integral with the housing 100, the top portion is part of and/or is integral with the cover 104, and the bottom portion is part of or integral with a bottom portion of the housing 100. In either scenario (or in other scenarios), the top portion may be removable from the bottom portion.

In some embodiments, the second compartment 114 may have a front cover 115. Like the front cover 113 of the first compartment 112, the front cover 115 of the second compartment 114 extends from the top portion and/or the bottom portion of the second compartment 114 in a front plane. The front cover 115 may, in some embodiments, only partially cover the front plane of the second compartment 114, such that one or more cables can pass through. It should be appreciated, however, that the second compartment 114 may not have a front cover 115 in some embodiments. The front cover 115, when present, may serve to further guide and organize one or more cables being received by the second compartment 114.

Similarly, in some embodiments, the second compartment 114 may have a back cover. The back cover may cover (either partially or fully) the opening to the interior volume 138. The back cover may cover the rear opening of the second compartment 114. As an example, the back cover could hinge or otherwise open for a user to easily access the second compartment 114. Although not necessary, the back cover may further contain and protect the one or more cables stored in the second compartment 114. It should be appreciated that many embodiments may not include a back cover, as shown in the embodiment of FIGs. 2-8.

The second compartment 114 may also include, in some embodiments, a cable hard stop similar to the cable hard stop 128 of the first compartment 112. The cable hard stop of the second compartment 114 may be a material or structure disposed on an inside surface of the top portion of the second compartment 114 (e.g., on and extending from a side of the top portion that is nearest the bottom portion). The cable hard stop extends into the interior volume 138 of the second compartment 114 and prevents one or more cables disposed within the interior volume 138 of the second compartment 114 from shifting within the second compartment 114 to undesirable positions (such as into the interior fiber routing portion 199 (FIG. 3) where the pigtail cable 131 is separated into the sets of fibers 198a-1 that are each connected to one of the connection ports 197a-1). It should be appreciated that the cable hard stop may be part of or integral with the front cover 115 in some embodiments. It should also be appreciated that the cable hard stop may be any suitable shape, size, or material.

The second compartment 114 may also include, in some embodiments, a second mounting feature 136. The second mounting feature 136 may be a protrusion or any other mounting structure designed to secure and/or guide a cable in and/or out of the second compartment 114. For example, the second mounting feature 136 may be used to mount and/or secure an incoming cable so that the incoming cable can be guided into the second compartment 114.

Similar to first mounting feature 124, it is within the scope of the present disclosure that in some embodiments, second compartment 114 may not include second mounting feature 136. That is, in some embodiments, second mounting feature 136 is optional within the second compartment 114. As such, it is within the scope of the present disclosure that neither first compartment 112 nor second compartment 114 have corresponding mounting features. Alternatively, as described herein, in some embodiments, both the first compartment 112 and the second compartment 114 may each have a respective mounting feature 124, 136 such that an incoming cable can be installed on either side of the housing 100. However, in other embodiments, only one of the first compartment 112 or the second compartment 114 may have a mounting feature in anticipation of an incoming cable only being installed on one side of the housing 100 and therefore having the incoming cable housed in only one of the first compartment 112 or the second compartment 114. In the embodiment shown in FIGs. 2-7, the first compartment 112 has a first mounting feature 124 and the second compartment 114 has a second mounting feature 136.

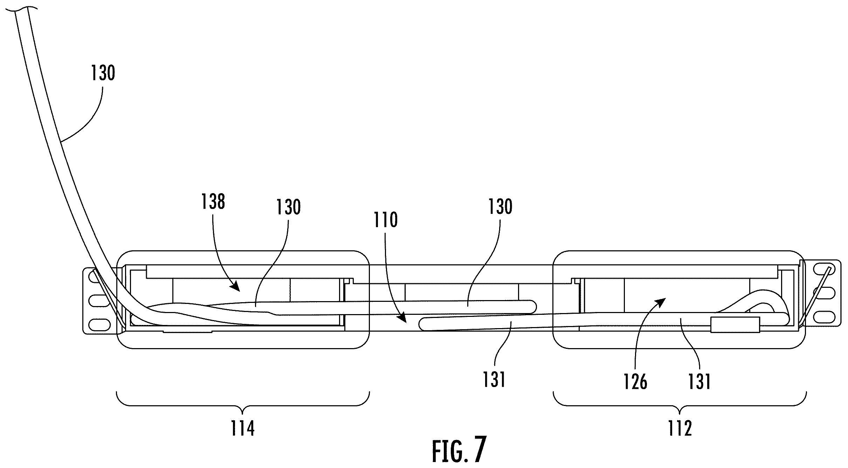

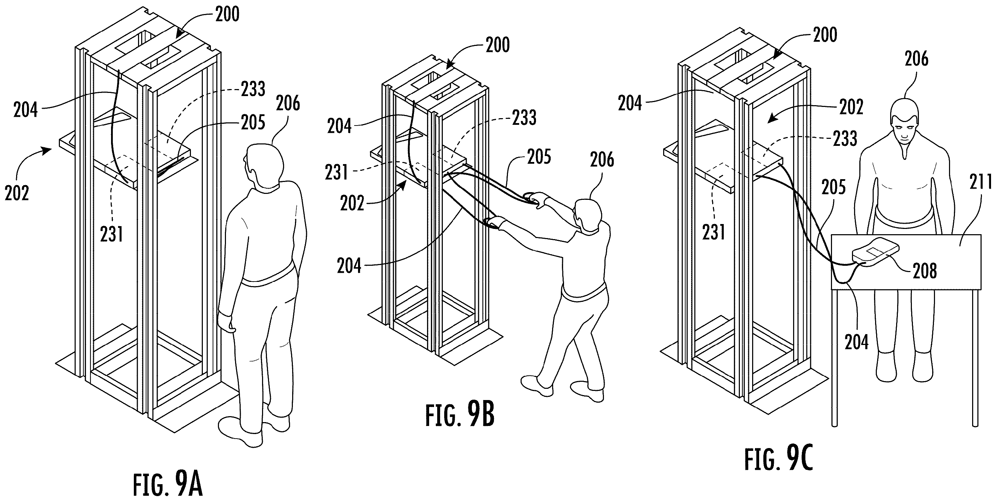

Referring now to FIG. 6, the housing 100 is shown with the cover 104 removed and incoming cable 130 and pigtail cable 131 installed. The incoming cable 130 is a cable comprised of a plurality of fibers that comes into an enclosure to connect, e.g., external devices, to a network. The incoming cable 130 is mounted to the second mounting feature 136 and feeds into the second compartment 114. In some embodiments, a user may loop or otherwise organize a portion of the incoming cable 130 before placing it into the second compartment 114 from the rear. For example and with brief reference to FIG. 7, a user can place the portion of the incoming cable 130 into the interior volume 138 of the second compartment 114 from the rear. Another end of the incoming cable 130 exits the second compartment 114 and enters the splice tray 110. The extra length of the incoming cable 130 that is stored in the second compartment 114 enables removability of the splice tray 110 from housing 100 for maintenance purposes while still attached to the incoming cable 130 as shown and described with respect to FIGs. 9A-9C.

The pigtail cable 131 is a cable that also comprises a plurality of fibers (e.g., sets of fibers 198a-1). Different from the incoming cable 130, the individual fibers of the pigtail cable 131 are sectioned off into groups and "pigtailed" off in different directions as sets of fibers 198a-1 to lead to the connection ports 197a-1, which are connected to the sets of connection cables 196a-1 (which may connect to, e.g., end point devices). Said differently, the pigtail cable 131 is a short length of fiber optic cable that has pre-installed connectors (such as an LC (lucent), SC (subscriber), or ST (straight tip) connector) on one end and is spliced to the incoming cable 130 on the other end (via the splice tray 110). This creates a connection between the incoming cable 130, which is connected to and part of a network, and the connection ports 197a-1 that are connected to the pigtails 198a-1 of the pigtail cable 131. Once spliced to the incoming cable 130, the connection ports 197a-1 are used to connect the fiber optic network to other devices via the connection cables 196a-1.

The pigtail cable 131 is connected to the splice tray 110 and feeds into the first compartment 112. In some embodiments, a user may loop or otherwise organize a portion of the pigtail cable 131 exterior to the housing 100 before placing it into the first compartment 112 from the rear. For example and with brief reference to FIG. 7, a user can place the portion of the pigtail cable 131 into the interior volume 126 of the first compartment 112 from the rear. Another end of the pigtail cable 131 exits the first compartment 112, separates into groupings of fibers or "pigtails," and enters the connection ports 106 and 108. The extra length of the pigtail cable 131 that is stored in the first compartment 112 enables removability of the splice tray 110 from the housing 100 for maintenance purposes while still attached to the pigtail cable 131, as shown and described with respect to FIGs. 9A-9C.

FIG. 8 shows another embodiment of a housing 300 that is disposable within an enclosure such as a rack assembly (e.g., see FIGs. 1A-1B). The housing 300 has a bottom panel 322, a top cover panel (not shown), a first side wall 323, and a second side wall 321. The overall purpose of the housing 300 is the same as that described above with respect to the housing 100. The housing 300 is similar to the housing 100 of FIGs. 2-7, except first compartment 304 and second compartment 306 are formed integrally with the housing 300.

The housing 300 has a first partition 320 extending at least partially from the first side wall 323 to the second side wall 321. The first partition 320 may be any height and may be comprised of any material. Further, the first partition 320 may be optional. The purpose of the first partition 320 may be to separate and organize certain cables within the housing 300 as described herein. That is, the first partition 320, along with other components of the housing 300, defines the first compartment 304 and the second compartment 306, which are usable to organize and store, e.g., an incoming cable and/or a pigtail cable 302, as described herein.

The housing 300 also has a second partition 327 extending in a direction that is generally parallel with each of the first side wall 323 and the second side wall 321. The second partition 327 is positioned on a first side of splice tray 308 and helps define the first compartment 304. The second partition 327 may be any suitable height and may be comprised of any suitable material. In some embodiments, the second partition 327 may be optional. The second partition 327 is configured to separate and organize certain cables and components within the housing 300, as described herein. That is, the second partition 327, along with other components of the housing 300, defines the first compartment 304, which organizes and stores, e.g., the pigtail cable 302, as described herein.

The first compartment 304 is defined by the bottom panel 322, the first side wall 323, a portion of the first partition 320, the second partition 327, and the top cover panel (which is removed and not shown in FIG. 8). Similar to the first compartment 112 of the previous embodiment, the first compartment 304 is configured to house and organize a cable such as the pigtail cable 302. The pigtail cable 302 is spliced with an incoming cable on the splice tray 308 in splice area 310 of the splice tray 308, and an overlength portion of the pigtail cable 302, which may be in excess of, e.g., at least 0.5 meters or 1 meter, may be looped within or otherwise stored in the first compartment 304. Another portion of the pigtail cable 302 then feeds out of the first compartment 304 and groups or "pigtails" out into different sections 326, which ultimately lead out as sets of fibers 398a-1 to the connection ports 316 (i.e., connection ports 397a-1) to connect to other devices via connection cables 314. For example, sets of connection cables 396g-1 are connected to connection ports 397g-1 and are in optical communication with sets of fibers 398g-1, which extend from the sections 326 of the pigtail cable 312. It should be appreciated that the first compartment 304 may be defined differently in other embodiments. For example, the second partition 327 may be removed in some embodiments, and a portion of the splice tray 308 may be used to define that portion of the first compartment 304. Other configurations are also contemplated within the scope of this disclosure.

The housing 300 also has a third partition 325 extending in a direction that is also generally parallel with each of the first side wall 323 and the second side wall 321. The third partition 325 is positioned on a second side of splice tray 308 and helps define the second compartment 306. The third partition 325 may be any suitable height and may be comprised of any suitable material. In some embodiments, the third partition 325 may be optional. The third partition 325 is configured to separate and organize certain cables and components within the housing 300, as described herein. That is, the third partition 325, along with other components of the housing 300, defines the second compartment 306, which organizes and stores, e.g., an incoming cable, as described herein.

The second compartment 306 is defined by the bottom panel 322, the second side wall 321, a portion of the first partition 320, the third partition 325, and the top cover panel (which is removed and not shown in FIG. 8). Similar to the second compartment 114 of the previous embodiment, the second compartment 306 is configured to house and organize a cable such as an incoming cable (which has not yet been installed in the embodiment shown in FIG. 8). The incoming cable is spliced with the pigtail cable 302 on in splice area 310 of the splice tray 308, and an overlength portion of the incoming cable, which may be in excess of, e.g., at least 0.5 meters or 1 meter, may be looped or otherwise stored in the second compartment 306. Another portion of the incoming cable then feeds out of the second compartment 306 and out of the housing 300. In some embodiments, the incoming cable may be mounted to a mounting feature, as described herein. The mounting feature may be formed integrally with the second side wall 321, the top cover panel (not shown), or any other component of the housing 300. It should be appreciated that the second compartment 306 may be defined differently in other embodiments. For example, the third partition 325 may be removed in some embodiments, and a portion of the splice tray 308 may be used to define that portion of the second compartment 306. Other configurations are also contemplated within the scope of this disclosure.

A front opening 311 to the housing 300 may be closable by a front hinge portion 324. The front hinge portion 324 may be attached to the bottom panel 322 of the housing 300 via hinges (as shown), or via any other connection mechanism. Further, the front hinge portion 324 may have a latch or other mechanism to keep the front hinge portion 324 in a closed and/or locked position while the housing 300 is being stored in an enclosure such as a rack assembly (e.g., see FIGs. 1A-1B). The purpose of the front hinge portion 324 may be such that the front opening 311 of the housing 300 can be closed in certain instances, such as when the connection ports 316 are not in use. The front hinge portion 324 may also be configured such that the front hinge portion 324 can be closed even when one or more connection cables 314 are connected to the connection ports 316. In some embodiments, the front hinge portion 324 may have a cutout allowing the connection cables 314 to pass into/out of the housing 300. The front hinge portion 324 may therefore help organize and contain the contents of the housing 300. It should be appreciated that the front hinge portion 324 shown in FIG. 8 may be configured differently, or the front opening 311 of the housing 300 may exist without a front hinge portion 324 at all and may be left open. Other configurations, such as a partial, mesh, netted, and/or lattice front portion, are also contemplated within the scope of this disclosure.

A rear opening 313 to the housing 300 may be closable by a rear hinge portion 329. The rear hinge portion 329 may be attached to the bottom panel 322 of the housing 300 via hinges (as shown), or via any other connection mechanism. In some embodiments, the rear hinge portion 329 may have a latch or other mechanism to keep the rear hinge portion 329 in a closed and/or locked position while the housing 300 is being stored in an enclosure such as a rack assembly (e.g., see FIGs. 1A-1B). The purpose of the rear hinge portion 329 may be such that the rear opening 313 of the housing 300 can be closed off in certain scenarios, such as when the housing 300 is being stored within an enclosure and the splice tray 308 does not need maintenance. Further, the rear hinge portion 329 may, in some embodiments, further define the first compartment 304 and the second compartment 306 by providing for an additional wall for each (which, e.g., opens and closes). The rear hinge portion 329 may therefore help organize and contain the contents of the housing 300. It should be appreciated that the rear hinge portion 329 shown in FIG. 8 may be configured differently, or the rear opening 313 of the housing 300 may exist without a rear hinge portion 329 at all and may be left open. Other configurations, such as a partial, mesh, netted, and/or lattice rear portion, are also contemplated within the scope of this disclosure.

The first compartment 304 and the second compartment 306 are configured to house and organize overlength portions of the pigtail cable 302 and the incoming cable in a way such that the splice tray 308 can be easily removed for splicing. For example, FIGs. 9A-9C illustrate how a maintenance worker 206 may interact with a housing 202 and the cables therewithin. In FIGs. 9A-9C, the housing 202 is disposed in a rack assembly 200. An incoming cable 204 and a pigtail cable 205 are installed within the housing 202 and are spliced together on splice tray 208, as described herein. The housing 202, similar to the housing 100 and the housing 300 described herein, includes a first compartment 233 for storage and organization of an overlength of the pigtail cable 205 and a second compartment 231 for storage and organization of an overlength of the incoming cable 204.

In some instances, a maintenance worker 206 may need to examine and/or to re-splice the incoming cable 204 and the pigtail cable 205 as shown in FIGS. 9A-9C. First, the maintenance worker 206 approaches the rack assembly 200 as shown in FIG. 9A. Next, as shown in FIG. 9B, the maintenance worker 206 grabs the incoming cable 204 with one hand and the pigtail cable 205 with another hand. The maintenance worker 206 pulls the overlength of the pigtail cable 205 and the overlength of the incoming cable 204 from the first and second compartments of the housing 202, respectively, in a direction away from the rack assembly 200. The maintenance worker 206 then pulls the splice tray 208 out of the housing 202 and places the splice tray 208 on table 211. The length of overlength of each of the pigtail cable 205 and the incoming cable 204, which may each be at least 0.5 meters in length, allows the splice tray 208 to reach the table without any of the connections within housing 202 being disturbed. Further, the incoming cable 204 and the pigtail cable 205 are removable without disturbing the incoming cable 204 being mounted to a mounting feature of the second compartment 231, as described herein. That is, at least a first portion (e.g., 1 meter, 0.4 meters, or any other length) of the incoming cable 204 is removable from the second compartment 231 without disturbing the incoming cable 204 being mounted to the second mounting feature of the second compartment 231, and at least a second portion (e.g., 1 meter, 0.4 meters, or any other length) of the pigtail cable 205 is removable from the first compartment 233 without disturbing the incoming cable 204 being mounted to the second mounting feature of the second compartment 231. Once the splice tray 208 is on the table 211, the maintenance worker 206 can examine and attend to the splice tray 208 accordingly (e.g., re-splicing the incoming cable 204 and the pigtail cable 205). After the incoming cable 204 and the pigtail cable 205 are examined or otherwise adjusted, the maintenance worker 206 then places the splice tray 208 back in the housing 202. Simultaneously or in any order, the maintenance worker 206 also loops or otherwise bundles each of the overlengths of the pigtail cable 205 and the incoming cable 204, and the maintenance worker 206 places the overlength of the pigtail cable 205 in the first compartment and the overlength of the incoming cable 204 in the second compartment. This is advantageous over other methods, which require extra materials and tools to deal with the overlength necessary to allow for re-splicing.

It should be appreciated that, although FIGs. 9A-9C show the maintenance worker 206 pulling out the overlengths of the pigtail cable 205 and the incoming cable 204 before pulling out the splice tray 208, in other embodiments, those three elements may be pulled into and/or out of the housing 202 in any order (or simultaneously).

It should also be appreciated that a similar process may be performed when the incoming cable 204 is being installed. For example, before the incoming cable 204 is installed, the rack assembly 200 may contain the housing 202 as described above with the second compartment 231 being empty (e.g., similar to the configuration shown in FIG. 8). To install the incoming cable 204, the maintenance worker 206 removes the pigtail cable 205 from the first compartment 233 within the housing 202 and then (simultaneously or in reverse order) removes the splice tray 208 from the housing 202. Splice tray 208 is then placed on table 211 where the maintenance worker 206 then splices the pigtail cable 205 with the incoming cable 204 using the splice tray 208. The maintenance worker 206 may also, in some embodiments, mount the incoming cable 204 to a mounting feature associated with the second compartment, as described herein. The maintenance worker 206 may then place the splice tray 208 back in the housing 202, place (e.g., at least 0.5 meters of) the pigtail cable 205 in the first compartment 233, and place (e.g., at least 0.5 meters of) the incoming cable 204 in the second compartment 231. It is within the scope of the present disclosure that these steps may occur simultaneously or in any order.

Although many of the embodiments disclosed herein involve housings containing one splice tray and two compartments (e.g., see FIGs. 3, 6, and 8), it should be appreciated that housings with more than one splice tray and more than two compartments are also contemplated within the scope of this disclosure. For example, also contemplated within the scope of this disclosure is a housing with two splice trays and four compartments, with each splice tray being in cable communication with two of those compartments. Other numbers of splice trays and compartments, and other layouts, are also contemplated within the scope of this disclosure.

### Example Flowchart(s)

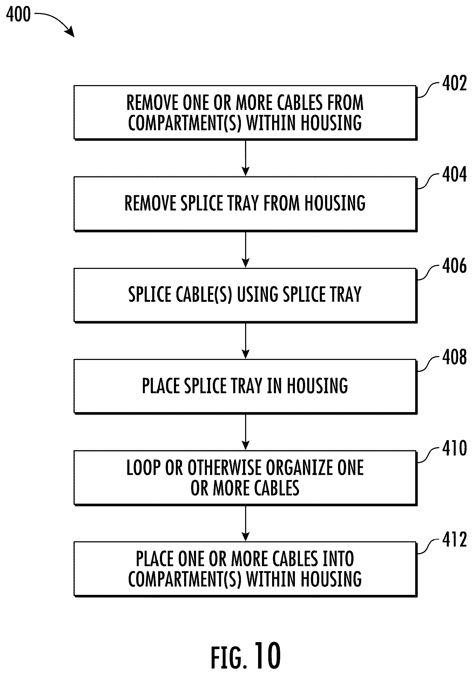

Embodiments of the present disclosure provide various methods for installing a cable, such as described herein. Various examples of the operations performed in accordance with some embodiments of the present disclosure is now provided with reference to FIG. 10. Unless otherwise expressly stated, it is not intended that any method set forth herein be construed as requiring that its steps be performed in a specific order.

FIG. 10 illustrates a flowchart according to an example method 400 of installing a cable. The method 400 includes removing one or more cables from compartment(s) within a housing at operation 402. For example, as described herein, the housing may have a first compartment and a second compartment with a splice tray disposed between. Before an incoming cable is installed, the first compartment may initially contain a cable such as a pigtail cable, and the second compartment may be empty. Operation 402 may therefore involve pulling that pigtail cable out of the second compartment.

The method 400 may include removing the splice tray at operation 404. For example, in some embodiments, a user may remove the splice tray to complete operation 404 at the same time as removing the one or more cables from the compartment(s) to complete operation 402. In other embodiments, operation 404 and operation 402 may be interchanged. The user may then put the splice tray in a location and position so that splicing can be performed.

At operation 406, the method may include splicing the one or more cables using the splice tray. For example, in the example in which a pigtail cable is initially stored within the second compartment and then pulled out of the second compartment at operation 402, operation 406 may involve splicing an incoming cable to the pigtail cable via the splice tray. This may be done while the cables and splice tray are outside of the housing.

At operation 408, the method 400 may include placing the splice tray back in the housing. At operation 410, the method 400 may include looping or otherwise organizing one or more cables. For example, a user may loop the incoming cable in a spiral or other organized configuration and then loop the pigtail cable in a spiral or other organized configuration. Then, at operation 412, the method 400 may include placing the one or more cables into the compartments within the housing. For example, the user may put the incoming cable in, e.g., a looped configuration and then place the looped or otherwise organized incoming cable in the first compartment of the housing. The user may also put the pigtail cable in, e.g., a looped configuration and then place the looped or otherwise organized pigtail cable in the second compartment of the housing.

It should be appreciated that operation 408, operation 410, and operation 412 may be executed in any order or simultaneously. It should also be appreciated that operation 410 may be optional. Further, it should be appreciated that the housing may include more compartments and/or more splice trays. The method 400 may also include other operations.

### Conclusion

Many modifications and other embodiments of the disclosures set forth herein may come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A system comprising:
a housing comprising:
one or more connection features;
a first compartment comprising a first mounting feature;
a second compartment; and
a splice tray disposed between the first compartment and the second compartment,
wherein at least 0.5 meters of a second cable is stored within the second compartment, and
wherein the second cable runs from the splice tray, through the second compartment, and feeds out into one or more pigtail cables that lead to the one or more connection features.

2. The system of claim 1, wherein an incoming cable is mountable to the first mounting feature such that the incoming cable feeds into the first compartment, wherein at least 0.5 meters of the incoming cable is storable within the first compartment, and wherein the incoming cable is spliced to the second cable via the splice tray.

3. The system of claim 2, wherein at least a first portion of the incoming cable is removable from the first compartment without disturbing the incoming cable being mounted to the first mounting feature, and wherein at least a second portion of the second cable is removable from the second compartment without disturbing the incoming cable being mounted to the first mounting feature.

4. The system of any one of claims 2-3, wherein the first compartment further comprises a first cable hard stop, wherein the second compartment further comprises a second cable hard stop, and wherein the first cable hard stop and the second cable hard stop cause the incoming cable and the second cable to stay within the first compartment and the second compartment, respectively.

5. The system of any one of claims 2-4, wherein the second compartment comprises a second mounting feature such that the incoming cable and the second cable are interchangeable within the first compartment and the second compartment.

6. The system of any one of claims 2-5, wherein the first compartment comprises a first top portion and a first bottom portion, and wherein the second compartment comprises a second top portion and a second bottom portion.

7. The system of claim 6, wherein the first top portion, the second top portion, the first bottom portion, and the second bottom portion are integral with the housing.

8. The system of claim 6, wherein the first top portion and the first bottom portion are connected by a first side portion and a second side portion, and wherein the second top portion and the second bottom portion are connected by a third side portion and a fourth side portion.

9. The system of any one of claims 1-8, wherein the splice tray is removable from the housing.

10. The system of any one of claims 1-9, wherein at least 1 meter of the second cable is storable within the second compartment.

11. The system of claim 4, wherein the first and the second cable hard stops are attached to the top portion on a side of the top portion that is nearest the bottom portion; and
wherein the first and second cable hard stops interact with the respective first and second compartments such that cables inserted into either the first or second compartments are not able to shift to an undesirable position within or outside the respective first or second compartment.

12. The system of any one of claims 1-11, wherein the top portion is removable from the bottom portion.

13. The system of any one of claims 1-12, wherein the top portion is integral with a cover of a housing in which the compartment is disposed.

14. The system of any one of claims 1-13, wherein the first and second compartment each define an opening for user access cables stored within the respective compartments.
